(19) Europäisches Patentamt / European Patent Office / Office européen des brevets

(11) **EP 4 614 605 A1**

(12) **EUROPEAN PATENT APPLICATION**
published in accordance with Art. 153(4) EPC

(43) Date of publication:
**10.09.2025 Bulletin 2025/37**

(21) Application number: 23885924.3

(22) Date of filing: **08.06.2023**

(51) International Patent Classification (IPC):
$H01M\ 4/505^{(2010.01)}$    $H01M\ 4/36^{(2006.01)}$
$H01M\ 4/525^{(2010.01)}$    $H01M\ 4/131^{(2010.01)}$
$H01M\ 10/054^{(2010.01)}$    $H01M\ 4/02^{(2006.01)}$

(52) Cooperative Patent Classification (CPC):
H01M 4/02; H01M 4/131; H01M 4/36; H01M 4/505;
H01M 4/525; H01M 10/054; Y02E 60/10

(86) International application number:
**PCT/KR2023/007835**

(87) International publication number:
**WO 2024/096226 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022 KR 20220142644**

(71) Applicant: **ECOPRO BM CO., LTD.**
**Cheongju-si, Chungcheongbuk-do 28117 (KR)**

(72) Inventors:
• **JUNG, Kuhyun**
**Cheongju-si Chungcheongbuk-do 28116 (KR)**
• **LEE, Dongwook**
**Cheongju-si Chungcheongbuk-do 28116 (KR)**
• **KIM, Da Mo A**
**Cheongju-si Chungcheongbuk-do 28116 (KR)**
• **LEE, Myeong Joo**
**Cheongju-si Chungcheongbuk-do 28116 (KR)**
• **PARK, A Ram**
**Cheongju-si Chungcheongbuk-do 28116 (KR)**

(74) Representative: **Beck & Rössig**
**European Patent Attorneys**
**Denninger Str. 169**
**81925 München (DE)**

(54) **CATHODE ACTIVE MATERIAL FOR SODIUM SECONDARY BATTERY, METHOD FOR PRODUCING SAME, AND SODIUM SECONDARY BATTERY COMPRISING SAME**

(57) Provided are a positive electrode active material for a sodium secondary battery including: a sodium manganese-based oxide which includes at least sodium (Na), nickel (Ni), and manganese (Mn) and contains 55 mol% or more of manganese in all metals other than sodium, wherein the sodium manganese-based oxide is a secondary particle formed by agglomeration of at least one primary particles, and a surface and an inside of the secondary particles are doped with cobalt (Co), a method for producing the positive electrode active material, and a positive electrode and a sodium secondary battery including the positive electrode active material.

FIG. 1C

EP 4 614 605 A1

**Description**

[Technical Field]

The present invention relates to a positive electrode active material for a sodium secondary battery, a method for producing the same, and a sodium secondary battery including the same.

[Background Art]

A lithium ion secondary battery has been widely used as an energy storage device in various electronic technology fields. In recent years, as the demand of a lithium ion secondary battery rapidly increases, a sodium ion secondary battery is attracting attention for replacing lithium which is an expensive metal. Since a sodium ion secondary battery has a working principle of an insertion/desorption reaction similar to a lithium ion secondary battery, it is one of next generation materials having a high possibility of application to a secondary battery.

A transition metal oxide having a layered structure which is a representative form as a positive electrode active material has excellent electrochemical performance and is easily synthesized while having a simple structure. It is divided into an O3 type and a P2 type depending on the position of a sodium ion, and of the two, a P2 type positive electrode active material has relatively high atmospheric and moisture stability and is less sensitive to synthesis conditions such as temperature and atmosphere. However, since the sodium ion having a large ionic radius changes its lattice structure during insertion/desorption in the layered structure, the positive electrode active material continues to cause phase transition, and due to the irreversible phase occurring during the process, the cycle life and the high capability rate of a sodium ion secondary battery are deteriorated.

In the layered structure transition metal oxide, a high-manganese (Mn)-based sodium nickel manganese oxide (MNMO) has benefits such as high capacity, price competitiveness (large reserves), and environmental friendliness, as compared with other transition metal oxides, but due to manganese included in an excessive amount in the oxide, it has relatively low electrical conductivity, and thus, the capability rate of the sodium secondary battery is low. As such, when the capability rate is low, the charge/discharge capacity and the life efficiency (capacity retention) are deteriorated during cycling of the sodium secondary battery.

In addition, sodium by-products (such as $Na_2CO_3$ and NaOH) remaining on the surface of particles in a large amount during firing of a positive electrode active material reduces electrochemical performance of a battery, for example, causes gassing due to an electrolyte side reaction and a decrease in the capacity of a positive electrode material and output during battery operation. Conventionally, a method for removing by-products from the surface of a positive electrode active material by a water washing treatment using distilled water, ethanol, or the like is applied, but there is a limitation in sufficiently removing residual sodium, and a sodium ion present in a positive electrode active material is desorbed and a particle surface may be damaged in a water washing process.

In order to solve the problem, there were attempts to improve the problems of the high manganese-based oxide through structural improvement and surface modification of particles, such as adjustment of positive electrode particle size or coating of a particle surface, but they are not at a commercial level.

[Disclosure of Invention]

[Technical Problem]

In order to improve a decrease in electrical conductivity due to manganese included in an excessive amount in the high-manganese-based oxide, it is preferred to produce a ternary transition metal oxide which further includes a transition metal other than manganese. However, when a co-precipitation reaction proceeds for producing a ternary transition metal hydroxide precursor, manganese oxides (such as $MnO_2$) are synthesized in a large amount due to high reactivity of manganese.

An object of the present invention is to provide a technology of doping a binary transition metal oxide including a high content of manganese with cobalt which is a heterogeneous transition metal. Specifically, by performing cobalt coating when the sodium high-manganese-based oxide is washed with water, residual sodium by-products are removed and simultaneously the surface and the inside of the oxide particles are doped with a cobalt element, and thus, a ternary transition metal oxide may be provided.

Another object of the present invention is to provide a sodium high-manganese-based NCM (Ni-Co-Mn) oxide in which 3 or more transition metals are uniformly distributed on the surface and in the inside of the oxide particles.

Still another object of the present invention is to provide a sodium secondary battery in which the low capability rate and life characteristics of a conventional high manganese-based oxide are improved, by using a positive electrode including the sodium high-manganese-based oxide positive electrode active material.

[Technical Solution]

In one general aspect, a positive electrode active material for a sodium secondary battery includes: a sodium manganese-based oxide which includes at least sodium (Na), nickel (Ni), and manganese (Mn) and contains 55 mol% or more of manganese in all metals other than sodium, wherein the sodium manganese-based oxide is a secondary particle formed by agglomeration of at least one primary particle, and a surface and an inside of the secondary particles are doped with cobalt (Co).

The sodium manganese-based oxide may satisfy the following Relation 1:

[Relation 1]

$$(Dc-Ds)/Dt \leq \pm 10\%$$

wherein when an area corresponding to 0 to 50% of a length (R) from a center to a surface based on a cross section of the secondary particle is defined as a first area ($R_1$) and an area corresponding to 50 to 100% of the length is defined as a second area ($R_2$), Ds, Dc, and Dt are measured in the first area ($R_1$), the second area ($R_2$), and the entire cross section of the particle ($R_1+R_2$), respectively, and are molar concentrations of cobalt (Co) to all metals other than sodium (M), respectively.

The cobalt concentration of the first area ($R_1$) may be 50 mol% or more with respect to 100 mol% of the total cobalt concentration based on the cross section of the secondary particle.

The sodium manganese-based oxide may satisfy the following Relation 2:

[Relation 2]

$$(Mc-Ms)/Mt \leq \pm 10\%$$

wherein when an area corresponding to 0 to 50% of a length (R) from a center to a surface based on a cross section of the secondary particle is defined as a first area ($R_1$) and an area corresponding to 50 to 100% of the length is defined as a second area ($R_2$), Ms, Mc, and Mt are measured in the first area ($R_1$), the second area ($R_2$), and the entire cross section of the particle ($R_1+R_2$), respectively, and are molar concentrations of nickel (Ni) or manganese (Mn) to all metals other than sodium (M), respectively.

The primary particles of the sodium manganese-based oxide may have an aspect ratio of 1:2.5 to 1:5.5.

The sodium manganese-based oxide may be represented by the following Chemical Formula 1:

[Chemical Formula 1]      $Na_aNi_xCo_yM1_zMn_{1-x-y-z}O_2$

wherein M1 is at least one selected from P, Sr, Ba, Ti, Zr, Mn, Al, W, Ce, Hf, Ta, Cr, F, Mg, Cr, V, Fe, Zn, Si, Y, Ga, Sn, Mo, Ge, Nd, B, Nb, Gd, and Cu, and $0.50 \leq a \leq 0.80$, $0.05 \leq x \leq 0.45$, $0.01 \leq y \leq 0.15$, $0 \leq z \leq 0.1$, and $0.55 \leq 1-x-y-z \leq 0.85$ are satisfied.

The sodium manganese-based oxide may show at least one peak selected from the group consisting of (004), (100), (101), (102), (103), (104), and (002) peaks by X-ray diffraction analysis (XRD).

The sodium manganese-based oxide may have a NiO ratio of 5% or less as measured by a Rietveld refinement method based on X-ray diffraction analysis.

The sodium manganese-based oxide may include a P2-type layered structure.

The positive electrode active material may include 5,000 ppm or less of residual sodium.

In another general aspect, a method for producing a positive electrode active material for a sodium secondary battery includes: a) preparing a sodium manganese-based oxide which includes at least sodium (Na), nickel (Ni), and manganese (Mn) and contains 55 mol% or more of manganese in all metals other than sodium; b) feeding the sodium manganese-based oxide, a solvent, and a cobalt precursor to a reactor, and forming a cobalt compound on the surface of particles of the sodium manganese-based oxide; and c) heat treating a product of b) to dope the surface and the inside of the sodium manganese-based oxide particles with cobalt.

The sodium manganese-based oxide of step a) may be a secondary particle formed by agglomeration of at least one primary particle, and the primary particles may have an aspect ratio of 1:2.5 to 1:5.5.

Step b) may include: b1) feeding the sodium manganese-based oxide and the solvent to the reactor and performing stirring; and b2) feeding the cobalt precursor to the reactor and performing stirring to form a cobalt hydroxide on the surface of the sodium manganese-based oxide.

The cobalt precursor in step b) may be fed to the reactor so that a mole ratio (Co/M) of cobalt (Co) to all metals other than sodium (M) of the sodium manganese-based oxide is 1 to 15.

The cobalt precursor of step b) may include $Co(OH)_2$, $CoOOH$, $Co(OCOCH_3)_2$, $Co(NO_3)_2$, $CoSO_4$, $Co(SO_4)_2$, or a combination thereof.

The heat treatment of step c) may be performed at 600 to 900°C for 6 to 18 hours.

In another general aspect, a positive electrode for a sodium secondary battery includes the positive electrode active material.

In still another general aspect, a sodium secondary battery using the positive electrode is provided.

[Advantageous Effects]

In the present invention, a surface deterioration problem may be effectively alleviated only with a relatively small Co doping amount by uniformly doping the surface and the inside of the sodium manganese-based oxide particles with cobalt and may improve the low electrical conductivity and capability rate of a high-manganese-based oxide.

In addition, in the present invention, the water washing process of residual sodium and a Co coating process may be simultaneously performed under certain conditions, thereby uniformly forming a Co compound throughout the surface of the sodium manganese-based oxide particles, performing uniform Co doping in a post-process, and allowing process simplification by integrating multiple overlapping processes.

The sodium secondary battery of the present invention may contribute to implementation of a long-life sodium secondary battery having improved low capability rate and life characteristics of a conventional high-manganese-based oxide, by introducing the positive electrode active material for a sodium secondary battery as described above. In addition, since Na is used instead of Li which is an expensive metal, and a ratio of Mn which is less expensive than Ni and Co may be increased, the present invention may have price competitiveness.

[Brief Description of Drawings]

FIGS. 1A to 1C are SEM images of surfaces of particles produced in step a) (before coating), step b) (after coating), and step c) (after heat treatment) of Example 1, and FIG. 1D is an SEM image of a surface of a positive electrode active material particle produced in Comparative Example 4.

FIGS. 2A to 2D are SEM-EDS images of surfaces of positive electrode active material particles doped with Co which were produced in Example 1 and Comparative Examples 2 to 4.

FIGS. 3A and 3B are cross sectional SEM-EDS images of positive electrode active material particles doped with Co which were produced in Example 1 and a graph (EDS line scanning) showing change in contents of metal elements (Ni, Co, and Mn) present in sodium manganese-based oxide secondary particles through EDS analysis to a direction indicated in the cross-sectional SEM image.

FIG. 4 shows results of XRD analysis of positive electrode active materials (bulk) produced in Example 1 and Comparative Examples 2 and 3.

[Best Mode for Carrying Out the Invention]

Advantages and features of the present invention and methods to achieve them will be elucidated from exemplary embodiments described below in detail with reference to the accompanying drawings. However, the present invention is not limited to exemplary embodiments disclosed below, but will be implemented in various forms, and the exemplary embodiments of the present invention make disclosure of the present invention thorough and are provided so that those skilled in the art can easily understand the scope of the present invention. Therefore, the present invention will be defined by the scope of the appended claims.

Unless otherwise defined herein, all terms used in the specification (including technical and scientific terms) may have the meaning that is commonly understood by those skilled in the art. Throughout the present specification, unless explicitly described to the contrary, "comprising" any elements will be understood to imply further inclusion of other elements rather than the exclusion of any other elements. In addition, unless explicitly described to the contrary, a singular form includes a plural form herein.

An exemplary embodiment of the present invention provides a positive electrode active material for a sodium secondary battery including: a sodium manganese-based oxide which includes at least sodium (Na), nickel (Ni), and manganese (Mn) and contains 55 mol% or more of manganese in all metals other than sodium, wherein the sodium manganese-based oxide is a secondary particle formed by agglomeration of at least one primary particle, and a surface and an inside of the secondary particles are doped with cobalt (Co).

The sodium manganese-based oxide is an NNMO-based sodium manganese-based oxide including at least sodium, nickel, and manganese. The sodium manganese-based oxide is a high-manganese (high-Mn)-based oxide containing 55 mol% or more of manganese in all metals other than sodium, and the content of manganese in metals other than sodium may be 55 mol% or more, 60 mol% or more, or 65 mol% or more, and though the upper limit is not particularly limited, may be, for example, 85 mol% or less, 80 mol% or less, or 75 mol% or less. As the content of manganese in metals other than sodium increases, a high capacity may be exerted under a high voltage operation environment, and both nickel and cobalt concentrations may be decreased to increase price competitiveness.

The sodium manganese-based oxide of the present invention is a secondary particle formed by agglomeration of at least one primary particle and is characterized in that the surface and the inside of the secondary particle are doped with cobalt (Co).

Deterioration of most of the positive electrode active material starts on the surface of oxide particles and spreads into a material, and in particular, surface deterioration by a side reaction with an electrolyte may occur in a high voltage range where a high content of manganese-based oxide operates. The present invention may effectively alleviate a surface deterioration problem only with a relatively small Co doping amount by uniformly doping the surface and the inside of the sodium manganese-based oxide particles with cobalt, and may improve the low electrical conductivity and capability rate of the high-manganese-based oxide to increase the cyclic life of a battery.

Meanwhile, as described above, when doping by Co coating proceeds after producing a sodium oxide using a binary transition metal hydroxide precursor, occurrence of manganese oxide (such as $MnO_2$) by-products synthesized in a large amount, which are a problem during production of the high-manganese ternary hydroxide precursor may be suppressed. In addition, as comparison with a technology of forming a coating layer by distributing Co concentrically only on the surface of the oxide particles, in the present invention, the effects described above may be further improved by uniformly doping the inside and the surface of the oxide particles with Co. Meanwhile, when Co which is an electrochemically active metal is doped, deterioration of the surface of the oxide particles may be prevented, and also, Co may participate in an oxide reduction reaction during charging/discharging of a sodium secondary battery, and thus, a discharge capacity may be increased as compared with the case of coating/doping with other metals.

The sodium manganese-based oxide may have substantially no molar concentration gradient of cobalt (Co) in a radial direction of the cross section of the secondary particles. Thus, the effects described above may be further improved. Herein, having substantially no molar concentration gradient of cobalt may be a concept which includes a small change in cobalt concentration in some areas of the cross section of the secondary particle, and for example, may exclude the case in which a tendency for a constant concentration change is shown, for example, the cobalt concentration gradually decreases or increases in the radial direction of the particles.

The sodium manganese-based oxide may satisfy the following Relation 1:

$$[Relation\ 1]$$

$$(Dc-Ds)/Dt \leq \pm 10\%$$

wherein when an area corresponding to 0 to 50% of a length (R) from a center to a surface based on a cross section of the secondary particle is defined as a first area ($R_1$) and an area corresponding to 50 to 100% of the length is defined as a second area ($R_2$), Ds, Dc, and Dt are measured in the first area ($R_1$), the second area ($R_2$), and the entire cross section of the particle ($R_1+R_2$), respectively, and are molar concentrations of cobalt (Co) to all metals other than sodium (M), respectively.

The sodium manganese-based oxide may satisfy, for example, $(Dc-Ds)/Dt \leq \pm 9\%$, $(Dc-Ds)/Dt \leq \pm 8\%$, $(Dc-Ds)/Dt:S::17\%$, $(Dc-Ds)/Dt \leq \pm 6\%$, $(Dc-Ds)/Dt \leq \pm 5\%$, $(Dc-Ds)/Dt \leq \pm 4\%$, $(Dc-Ds)/Dt \leq \pm 3\%$, $(Dc-Ds)/Dt \leq \pm 2\%$, or $(Dc-Ds)/Dt \leq \pm 1\%$; $0 \leq (Dc-Ds)/Dt \leq 9\%$, $0 \leq (Dc-Ds)/Dt \leq 8\%$, $0 \leq (Dc-Ds)/Dt \leq 7\%$, $0 \leq (Dc-Ds)/Dt \leq 6\%$, $0 \leq (Dc-Ds)/Dt \leq 5\%$, $0 \leq (Dc-Ds)/Dt \leq 4\%$, $0 \leq (Dc-Ds)/Dt \leq 3\%$, $0 \leq (Dc-Ds)/Dt \leq 2\%$, or $0 \leq (Dc-Ds)/Dt \leq 1\%$; or $0 \geq (Dc-Ds)/Dt \geq -9\%$, $0 \geq (Dc-Ds)/Dt \geq -8\%$, $0 \geq (Dc-Ds)/Dt \geq -7\%$, $0 \geq (Dc-Ds)/Dt \geq -6\%$, $0 \geq (Dc-Ds)/Dt \geq -5\%$, $0 \geq (Dc-Ds)/Dt \geq -4\%$, $0 \geq (Dc-Ds)/Dt \geq -3\%$, $0 \geq (Dc-Ds)/Dt \geq -2\%$, or $0 \geq (Dc-Ds)/Dt \geq -1\%$. In the present invention, Co doping is uniformly performed on the surface and into the inside of the secondary particles of the sodium manganese-based oxide, and synthesis of by-products such as a manganese oxide ($MnO_2$) and a cobalt oxide ($CoO_2$) is suppressed, so that a high-manganese-based transition metal ternary oxide having a uniform transition metal composition on the surface and in the inside of the secondary particles may be produced.

The sodium manganese-based oxide may have the cobalt concentration of the first area ($R_1$) of 50 mol% or more or 60 mol% or more and 80 mol% or less or 70 mol% or less, and for example, may be 50 to 80 mol%, 50 to 75 mol%, 50 to 70 mol%, or 50 to 60 mol%, with respect to 100 mol% of a total cobalt concentration based on the cross section of the secondary particles. Accordingly, the effects described above may be further improved.

The sodium manganese-based oxide may satisfy the following Relation 2:

$$[Relation\ 2]$$

$$(Mc-Ms)/Mt \leq \pm 10\%$$

wherein when an area corresponding to 0 to 50% of a length (R) from a center to a surface based on a cross section of the secondary particle is defined as a first area ($R_1$) and an area corresponding to 50 to 100% of the length is defined as a second area ($R_2$), Ms, Mc, and Mt are measured in the first area ($R_1$), the second area ($R_2$), and the entire cross section of the particle ($R_1$+$R_2$), respectively, and are molar concentrations of nickel (Ni) or manganese (Mn) to all metals other than sodium (M), respectively.

The sodium manganese-based oxide may satisfy for example, (Mc-Ms)/Mt$\leq\pm$9%, (Mc-Ms)/Mt:S::18%, (Mc-Ms)/Mt$\leq\pm$7%, (Mc-Ms)/Mt$\leq\pm$6%, (Mc-Ms)/Mt$\leq\pm$5%, (Mc-Ms)/Mt$\leq\pm$4%, (Mc-Ms)/Mt$\leq\pm$3%, (Mc-Ms)/Mt$\leq\pm$2%, or (Mc-Ms)/Mt$\leq\pm$1%; 0$\leq$(Mc-Ms)/Mt$\leq$9%, 0$\leq$(Mc-Ms)/Mt$\leq$8%, 0$\leq$(Mc-Ms)/Mt$\leq$7%, 0$\leq$(Mc-Ms)/Mt$\leq$6%, 0$\leq$(Mc-Ms)/Mt$\leq$5%, 0$\leq$(Mc-Ms)/Mt$\leq$4%, 0$\leq$(Mc-Ms)/Mt$\leq$3%, 0$\leq$(Mc-Ms)/Mt$\leq$2%, or 0$\leq$(Mc-Ms)/Mt$\leq$1%; or 0$\geq$(Mc-Ms)/Mt$\geq$-9%, 0$\geq$(Mc-Ms)/Mt$\geq$-8%, 0$\geq$(Mc-Ms)/Mt$\geq$-7%, 0$\geq$(Mc-Ms)/Mt$\geq$-6%, 0$\geq$(Mc-Ms)/Mt$\geq$-5%, 0$\geq$(Mc-Ms)/Mt$\geq$-4%, 0$\geq$(Mc-Ms)/Mt$\geq$-3%, 0$\geq$(Mc-Ms)/Mt$\geq$-2%, or 0$\geq$(Mc-Ms)/Mt$\geq$-1%. In the present invention, synthesis of by-products such as nickel oxide (NiO) and manganese oxide ($MnO_2$) is suppressed, so that a high-manganese-based transition metal ternary oxide having a uniform transition metal composition on the surface and in the inside of the secondary particles may be produced.

Meanwhile, the molar concentration of Co, Ni, and Mn which are distributed in the radial direction of the secondary particles may be results of performing EDX mapping for a cross-sectional SEM image or TEM image of the sodium manganese-based oxide particles and then performing line scanning analysis, but the present invention is not limited thereto.

The primary particles of the sodium manganese-based oxide may have an aspect ratio of 1:2.5 to 1:5.5, 1:2.5 to 1:5, or 1:2.7 to 1:4.5, and the shape of the primary particles may be a plate type or a sheet type.

When the aspect ratio of the primary particles is less than 1:2.5, resistance during charging/discharging may be increased, and when the aspect ratio is more than 1:5.5, Na and Air in the layered structure react to form by-products, which is thus not preferred.

The term "aspect ratio" used herein is a ratio between a long axis (length; a axis) and a short axis (width; b axis) of the primary particle, and when the long axis shows a direction in a longer area of the primary particle, the short axis shows a length in a shorter area positioned on the same plane as the long axis. Herein, the primary particles may have a sheet shape, and this means that the length in the thickness direction of the primary particles is significantly smaller than the length in the plane direction (long axis and short axis) of the primary particles. Meanwhile, the short axis may be in the direction which intersects perpendicularly to the long axis, and the "aspect ratio" of the primary particles may be calculated as a ratio between the long axis and the short axis of the primary particles measured from the surface of the primary particles. Accordingly, the overall shape of the primary particles may be determined depending on the lengths of the long axis (a axis) and the short axis (b axis). For example, when the aspect ratio which is a ratio between the long axis and the short axis of the primary particles is more than 5, the shape of the primary particles may be closer to a rod shape than a sheet shape. Meanwhile, as the aspect ratio of the primary particles is close to 1, the shape of the primary particles may be close to a sheet form. That is, in the present invention, the aspect ratio of the primary particles may be used as an indicator showing a sheet shape of the primary particles, and as the aspect ratio of the primary particles is close to 1, the primary particles conform to the sheet shape.

The sodium manganese-based oxide is positioned on a particle, and may further include a coating layer containing cobalt or not include a coating layer containing cobalt. Herein, it may be preferred that the sodium manganese-based oxide does not include the cobalt-containing coating layer. The cobalt-containing coating layer may be present on the surface of the primary particles and/or the secondary particles of the sodium manganese-based oxide, and may be formed as a continuous or discontinuous coating layer having a thickness of 30 nm or less, 20 nm or less, 0.1 to 10 nm, 0.1 to 5 nm, or 0.5 to 3 nm. Thus, surface deterioration occurring during charging/discharging in a high voltage range may be prevented. When the cobalt coating layer has a thickness more than the thickness range, a cobalt clumping phenomenon (non-uniform Co layer) may occur, synthesis of by-products such as a cobalt oxide ($CoO_2$) is increased on the surface of the sodium manganese-based oxide particle to make uniform cobalt doping on the surface and into the inside of the particles difficult, and a cobalt doping amount is not sufficient during production of the high-manganese NCM ternary transition metal oxide, so that it may be difficult to improve the low capability rate and life characteristics which are disadvantages of a conventional high-manganese-based oxide. Thus, in the present invention, Co is uniformly dispersed on the surface of the oxide particles by optimizing the Co content and mixing Co simultaneously with a water washing process of residual sodium, heat treatment temperature and time are adjusted in a post process to uniformly dope the surface and the inside of the oxide particles with a doping metal, so that the Co coating layer may not substantially be formed.

The sodium manganese-based oxide may be represented by the following Chemical Formula 1:

[Chemical Formula 1] $Na_aNi_xCo_yM1_zMn_{1-x-y-z}O_7$

wherein M1 is at least one selected from P, Sr, Ba, Ti, Zr, Mn, Al, W, Ce, Hf, Ta, Cr, F, Mg, Cr, V, Fe, Zn, Si, Y, Ga, Sn, Mo, Ge, Nd, B, Nb, Gd, and Cu, and $0.50 \le a \le 0.80$, $0.05 \le x \le 0.45$, $0.01 \le y \le 0.15$, $0 \le z \le 0.1$, and $0.55 \le 1-x-y-z \le 0.85$ are satisfied.

The sodium manganese-based oxide of Chemical Formula 1 may have a mole ratio (Na/M) of sodium (Na) to all metals other than sodium (M) of 0.5 to 0.8. In Chemical Formula 1, when the content of Na corresponding to a is less than 0.5, the capacity may be lowered, and when it is more than 0.8, the position of a sodium ion changes so that a crystal structure of a O3 type may be shown, and the O3 type positive electrode active material may be more sensitive to low atmosphere and moisture stability, and synthesis conditions (such as temperature and atmosphere) than a P2 type. More preferably, Na may satisfy $0.60 \le a \le 0.80$, $0.60 \le a \le 0.75$, or $0.65 \le a \le 0.75$.

The sodium manganese-based oxide may have a mole ratio (Mn/M) of manganese (Mn) to all metals other than sodium (M) of 0.55 to 0.85. When the content range including manganese is satisfied, a high capacity may be shown under a high voltage operation environment and price competitiveness may be secured. The content of Mn may be more preferably $0.60 \le 1-x-y-z \le 0.85$, $0.60 \le 1-x-y-z \le 0.80$, or $0.60 \le 1-x-y-z \le 0.70$ in Chemical Formula 1.

The sodium manganese-based oxide may have a mole ratio (Ni/M) of nickel (Ni) to all metals other than sodium (M) of 0.05 to 0.45. In the content range including nickel, a problem arising as the nickel content increases, that is, a problem in which the structural stability and the chemical stability of an active material are deteriorated depending on a change in a nickel oxidation number may be suppressed. The content of Ni may be more preferably $0.1 \le x \le 0.45$, $0.2 \le x \le 0.45$, $0.25 \le x \le 0.45$, or $0.3 \le x \le 0.4$ in Chemical Formula 1.

In addition, the sodium manganese-based oxide may have a mole ratio (Ni/Mn) of nickel to manganese of 0.05 to 0.75, 0.1 to 0.7, 0.2 to 0.7, 0.3 to 0.6, or 0.4 to 0.6. When the mole ratio is at or lower than the upper limit of the designed range, synthesis of by-products such as a nickel oxide (Ni-O) due to nickel elution during production of an oxide by firing at a high temperature may be suppressed. On the contrary, when the mole ratio is at or more than the lower limit of the designed range, synthesis of by-products such as a manganese oxide ($MnO_2$) due to high reactivity of manganese is suppressed, so that a ternary transition metal oxide may be effectively produced, and also, electrochemical performance such as high discharge capacity of a sodium secondary battery may be improved.

The sodium manganese-based oxide may have a mole ratio (Co/Mn) of cobalt (Co) to all metals other than sodium (M) of 0.01 to 0.15, preferably 0.01 to 0.12, 0.01 to 0.1, 0.01 to 0.09, or 0.02 to 0.09.

The sodium manganese-based oxide may show at least one peak selected from the group consisting of (004), (100), (101), (102), (103), (104), and (002) peaks, and preferably, may show all of (004), (100), (101), (102), (103), (104), and (002) peaks, by X-ray diffraction analysis (XRD). The peaks are peaks forming a P2-type layered structure, and the present invention has a technical characteristic in stably maintaining a conventional P2-type layered structure even after performing Co coating and doping on the sodium manganese-based oxide particles having the P2-type layered structure under a high temperature condition. As described above, the positive electrode active material having the P2-type layered structure is less sensitive to synthesis conditions such as relatively high atmospheric and moisture stability, temperature, and atmosphere.

The sodium manganese-based oxide may have a NiO ratio of 5% or less, for example, 0.5 to 5%, 0.5 to 4.5%, 0.5 to 4.0%, or 0.5 to 3.5%, specifically 1% or more, 1.5% or more, 2% or more, 2.5% or more, 3% or more, or 3.1% or more and 5% or less, 4.5% or less, 4% or less, or 3.5% or less, and more specifically, 3.1% to 3.5%, 3.2% to 3.5%, 3.3% to 3.5%, or 3.4% to 3.5%, as measured by a Rietveld refinement method based on X-ray diffraction analysis. When the NiO ratio of the sodium manganese-based oxide is less than the range, Co doping may not be performed on the surface and into the inside of the secondary particles uniformly at a sufficient content, and when the NiO ratio is more than the range, an amount of produced heterogeneous phase impurities such as NiO may be increased.

The positive electrode active material may include 5,000 ppm or less of residual sodium, and for example, may include 0.1 to 0.5 wt%, 0.2 to 0.5 wt%, 0.1 to 0.49 wt%, 0.1 to 0.48 wt%, or 0.1 to 0.47 wt% of residual sodium with respect to the entire positive electrode active material. In the present invention, a water washing process and a Co mixing process are simultaneously performed on the positive electrode active material of a high-content manganese-based sodium manganese-based oxide (NNMO), thereby adjusting the sodium by-products remaining on the surface of particles to a low content, in which a cobalt compound may be formed uniformly throughout the surface of particles.

In addition, the positive electrode active material may include 15 wt% or less or 10 wt% or less of sodium hydroxide (NaOH) with respect to 100 wt% of residual sodium, and since a residual sodium water washing process and a Co coating process are performed on NaOH in residual sodium simultaneously, $Co(OH)_2$ is uniformly coated on the surface of the oxide particles, Co is doped in a heat treatment in a post-process, and a sodium salt (such as $Na_2SO_4$) as a

by-product may be easily removed with water.

The positive electrode active material particles may have an average particle diameter (D50) of 2 to 15 $\mu$m, for example, 4 to 10 $\mu$m. In this case, an electrode density is increased to improve energy density per unit volume of an electrode.

Hereinafter, the method for producing a positive electrode active material for a sodium secondary battery of the present invention will be provided.

The production method includes: a) preparing a sodium manganese-based oxide which includes at least sodium (Na), nickel (Ni), and manganese (Mn) and contains 55 mol% or more of manganese in all metals other than sodium; b) feeding the sodium manganese-based oxide, a solvent, and a cobalt precursor to a reactor, and forming a cobalt compound on the surface of particles of the sodium manganese-based oxide; and c) heat treating a product of b) to dope the surface and the inside of the sodium manganese-based oxide particles with cobalt.

In the present invention, in the positive electrode active material including a high-manganese-based oxide, a Co-doped sodium nickel manganese-based oxide (NNMO) positive electrode active material is produced by applying a wet method, and a uniform distribution may be formed throughout the surface of the positive electrode active material particles and surface defects may be suppressed. In addition, Co may be sufficiently diffused into the particles to improve surface deterioration caused by changes in lattice structure and shrinkage/expansion which occur during charging/discharging in a high voltage range, and the like.

a) is a step of preparing a high content manganese (high-Mn)-based oxide (NNMO) containing 55 mol% of manganese in all metals other than sodium.

For example, the step of preparing an oxide may include: a1) producing a nickel manganese hydroxide precursor containing 55 mol% or more of manganese in all metals; and a2) mixing the nickel manganese hydroxide precursor and a sodium compound and then performing a heat treatment to produce the sodium manganese-based oxide.

Step a1) of producing a precursor is not limited as long as it is a common method for producing a positive electrode active material precursor for a sodium secondary battery.

For example, the method for producing a precursor may be producing a composite transition metal hydroxide by a co-precipitation method, after feeding a nickel salt, a manganese salt, and a complex to a reactor. The nickel salt and the manganese salt may be acetates, nitrates, sulfates, halides, sulfides, hydroxides, oxides, or oxyhydroxides containing nickel or manganese, respectively, and specifically, may be $Ni(OH)_2$, $NiOOH$, $Ni(OCOCH_3)_2 \cdot 4H_2O$, $Ni(NO_3)_2 \cdot 6H_2O$, $NiSO_4$, $Ni(SO_4)_2 \cdot 7H_2O$, or a combination thereof, as the nickel salt, and $Mn(OH)_2$, $MnOOH$, $Mn(OCOCH_3)_2 \cdot 4H_2O$, $Mn(NO_3)_2 \cdot 6H_2O$, $MnSO_4$, $Mn(SO_4)_2 \cdot 7H_2O$, or a combination thereof, as the manganese salt, but the present invention is not limited thereto. A pH may be adjusted to 10 to 12 by feeding a basic solution to the reactor, and a small amount of an ammonium solution may be used as the complex.

The composite transition metal hydroxide precursor may be represented by the following Chemical Formula 2:

[Chemical Formula 2]       $Ni_{x2}Mn_{y2}(OH)_2$

wherein $0.05 \leq x2 \leq 0.45$ and $0.55 \leq y2 \leq 0.95$ are satisfied.

x2 denotes a ratio of the moles of Ni to the total moles of the transition metal and may satisfy $0.1 \leq x2 \leq 0.45$, $0.2 \leq x2 \leq 0.45$, $0.25 \leq x2 \leq 0.45$, or $0.3 \leq x2 \leq 0.4$, and y2 denotes a ratio of the moles of Mn to the total moles of the transition metal and may satisfy $0.60 \leq y2 \leq 0.90$, $0.60 \leq y2 \leq 0.80$, or $0.60 \leq y2 \leq 0.70$.

When the composite transition metal hydroxide precursor has a composition represented by Chemical Formula 2, a positive electrode active material produced from the precursor may exert a high capacity under a high voltage operation environment and decrease both nickel and cobalt concentrations to increase price competitiveness.

Step a2) of producing the sodium manganese-based oxide is not limited as long as it is a common method for producing an oxide of a positive electrode active material for a sodium secondary battery.

The sodium-containing raw material may be, for example, at least one selected from the group consisting of $Na_2CO_3$, $NaOH$, $NaNO_3$, $CH_3COONa$, and $Na_2(COO)_2$, and preferably, may be $Na_2CO_3$, $NaOH$, or a combination thereof.

The positive electrode active material precursor and the sodium compound during production of the positive electrode active may be mixed at a mole ratio of 1:0.5 to 1:0.8, 1:0.6 to 1:0.8, 1:0.6 to 1:0.75, or 1:0.65 to 1:0.75 of the transition metal of the precursor: sodium. When the sodium compound is within the range, the produced positive electrode active material may have a P2 type crystal structure, and thus, may be less sensitive to high atmospheric and moisture safety and synthesis conditions (such as temperature and atmosphere). In addition, a battery discharge capacity may be improved in the sodium content range, and Na which does not react and remains may be minimized.

The heat treatment may be performed at a temperature of 700°C to 1,100°C. When a firing temperature is within the range, a reaction between raw materials may sufficiently occur and particles may uniformly grow. The heat treatment may be performed more preferably at a temperature of 750 to 1,050°C, 850 to 1,050°C, or 900 to 1,000°C.

The heat treatment may be performed for 5 hours to 40 hours. When a firing time is within the range, a highly crystalline positive electrode active material may be obtained, the size of the particles is appropriate, and production efficiency may be improved. The heat treatment may be performed more preferably for 5 to 20 hours, 5 to 18 hours, 8 to 15 hours, or 10 to 14 hours.

Step b) of forming a cobalt compound on the surface of particles of the sodium manganese-based oxide may further include, specifically: b1) feeding the sodium manganese-based oxide and the solvent to the reactor and performing stirring; and b2) feeding the cobalt precursor to the reactor and performing stirring to form a cobalt hydroxide ($Co(OH)_2$) on the surface of the sodium manganese-based oxide.

In the present invention, a water washing process and a coating process are simultaneously performed under certain conditions, thereby forming the cobalt compound uniformly throughout the surface of secondary particles and integrating overlapping multiple processes to allow process simplification. In addition, when a heat treatment at a high temperature is performed after coating, the surface and the inside of the oxide particles may be uniformly doped with cobalt as described above, and thus, a high-manganese ternary transition metal oxide having a uniform transition metal composition may be produced.

In a conventional dry coating process or a coating process performed after a water washing treatment on the surface of a positive electrode active material, when a heat treatment is performed at a high temperature after coating, it may be difficult to form an overall uniform coating layer, for example, a coating layer in an island form is formed on the surface of particles, and also, uniform and sufficient cobalt coating into the particles may not be expected. The coating layer causes surface defects to increase a contact area (specific surface area) with an electrolyte solution and cause problems such as a battery swelling phenomenon by an electrolyte side reaction and reduced cycle life. In the present invention, since a uniform Co distribution is formed throughout the surface of the positive electrode active material particles, uniform Co doping may be performed in the post-process, and as a result, surface defects of the positive electrode active material particles are minimized to improve surface stability, increase a capacity, and improve cycle life.

b1) may be a step of feeding the sodium manganese-based oxide and a solvent to a reactor and performing stirring.

The sodium manganese-based oxide and the solvent may be mixed in the reactor at a weight ratio of 0.5:1.5 to 1.5:0.5 or 0.7:1.2 to 1.2:0.7, and as an example, 1:1. When they are mixed in the content range, the residual sodium may be effectively removed, sodium elution inside the oxide particles may be prevented, and simultaneously particle surface defects may be prevented.

A basic solution may be fed to the reactor to adjust the pH to 10 to 12, a small amount of an ammonium solution may be used as a complex, and a stirring speed may be 200 to 500 rpm, 200 to 400 rpm, or 300 to 400 rpm, but the present invention is not limited thereto. Thus, the cobalt compound may be uniformly formed on the surface of the sodium manganese-based oxide particles in step b2) of post-process.

b2) may be a step of feeding a cobalt precursor to the reactor and performing stirring to form a cobalt hydroxide ($Co(OH)_2$) on the surface of the sodium manganese-based oxide.

The cobalt precursor may be fed to the reactor so that the sum of the sodium manganese-based oxide and the solvent, and the cobalt compound are mixed at a weight ratio of 5:1 to 1.1:1, 4.5:1 to 1.5:1, preferably 4:1 to 1.5:1, or 3:1 to 1.5:1. Herein, the feeding of the cobalt precursor may be performed at 20 to 200 ml/hr, 20 to 180 ml/hr, or 20 to 160 ml/hr for 0.5 to 5 hours, 0.5 to 4 hours, 0.5 to 3 hours, or 0.5 to 1.5 hours. When the feeding speed is exceeded, it is difficult to uniformly coat the cobalt hydroxide on the surface of the sodium manganese-based oxide particles, and on the contrary, when the feeding speed is below the range, a process time is extended to increase the costs and Na elution occurs inside the positive electrode active material oxide particles, which is thus not preferred.

The cobalt precursor may be fed to the reactor so that a ratio (Co/M) of a cobalt (Co) content to all metals other than sodium (M) of the sodium manganese-based oxide is 0.01 to 0.15, preferably 0.01 to 0.12, 0.01 to 0.1, 0.01 to 0.09, or 0.02 to 0.09.

Step b) may be performed at a temperature of 40 to 70°C or 45 to 65°C under an inert atmosphere such as nitrogen or argon, and a coating time may be 60 to 90 minutes, for example, 75 to 105 minutes. Thus, the effects described above may be further improved.

The solvent may be a water washing solution, may be one or more selected from deionized water, distilled water, and ethanol, preferably may be deionized water. Herein, a temperature of the water washing solution used in the water washing may be 1 to 80°C or 5 to 50°C, but the present invention is not limited thereto.

The basic solution may be a hydroxide of an alkali metal or an alkaline earth metal such as NaOH, KOH, or $Ca(OH)_2$, a hydroxide of them, or a combination thereof, and may be added for adjusting the pH of the solution in the reactor.

The ammonium solution may include $NH_4OH$, $(NH_4)_2SO_4$, $NH_4NO_3$, $NH_4Cl$, $CH_3COONH_4$, $NH_4CO_3$, or a combination thereof, and may effectively co-precipitate a cobalt-containing raw material in the reactor as a complex.

The cobalt precursor may be a cobalt-containing solution, and may be produced by adding a cobalt-containing raw material to water or a mixed solvent of an organic solvent such as alcohol which may be uniformly mixed with water.

Meanwhile, the cobalt-containing raw material may be $Co(OH)_2$, $CoOOH$, $Co(OCOCH_3)_2$, $Co(NO_3)_2$, $CoSO_4$, $Co(SO_4)_2$, or a combination thereof, and preferably, may be $CoSO_4$ and/or $Co(SO_4)_2$. Herein, the cobalt-containing raw material may include hydroxides and anhydrides of the materials described above.

The reactor may be used without limitation as long as it is a reactor for co-precipitation which is commonly used in the production of a positive electrode active material.

The production method of the present invention may further include a drying process after step b). The drying process is a process for removing moisture from the positive electrode active material in which the Co compound has been formed including moisture through the water washing and coating processes, and may be drying at a temperature of 100 to 300°C for 12 hours under vacuum conditions.

c) may be a step of heat treating the product of step b) to dope the surface and the inside of the sodium manganese-based oxide particles with cobalt. Uniform cobalt doping is performed on the surface of the sodium manganese-based oxide particles and into the particles, and the surface stability of the positive electrode active material may be improved and capacity properties may be improved. In the present invention, phase transition (P2-O2) occurring in a high voltage range during charging/discharging may be suppressed by the Co doping onto the positive electrode active material, and a side reaction on the surface of the particles is suppressed to improve initial life deterioration and also P2-O2 phase transition occurring in a high voltage range during charging/discharging is prevented to improve even life characteristics.

The heat treatment may be performed at 600 to 900°C for 6 to 18 hours, and for example, may be performed at 700 to 900°C or 750 to 900°C for 8 to 16 hours, 10 to 14 hours, or 11 to 13 hours. When the heat treatment is performed below the temperature range and/or the time range, Co doping may not be uniformly performed at a sufficient content on the surface and into the inside of the particles, and on the contrary, when it is performed above the temperature range and/or the time range, an amount of produced heterogeneous phase such as NiO may be increased.

In the heat treatment of step c), a coating source may be further mixed. The coating source may be a compound including at least one selected from P, Sr, Ba, Ti, Zr, Mn, Al, W, Ce, Hf, Ta, Cr, F, Mg, Cr, V, Fe, Zn, Si, Y, Ga, Sn, Mo, Ge, Nd, B, Nb, Gd, and Cu.

Another exemplary embodiment of the present invention provides a positive electrode for a sodium secondary battery and a sodium secondary battery including the positive electrode active material.

The positive electrode includes a positive electrode active material layer positioned on a positive electrode current collector, and the positive electrode active material according to an aspect of the present invention is present on a positive electrode active material layer.

The positive electrode current collector is not particularly limited as long as it has a conductivity without causing a chemical change in a battery, and for example, stainless steel, aluminum, nickel, titanium, baked carbon, or aluminum or stainless steel which is surface-treated with carbon, nickel, titanium, silver, or the like, and the like may be used. In addition, the positive electrode current collector may have a thickness of usually 3 to 500 $\mu$m, and fine unevenness may be formed on the surface of the current collector to increase adhesive strength to the positive electrode active material. The positive electrode current collector may be provided in various forms such as a film, a sheet, a foil, a net, a porous body, foam, and a nonwoven fabric body.

In addition, the positive electrode active material layer may be a layer including a conductive material and a binder with the positive electrode active material described above.

Herein, the conductive material is used for imparting conductivity to an electrode and may be used without particular limitation as long as it has a conductivity without causing a chemical change in a positive electrode active material. A non-limiting example of the conductive material may include graphites such as natural graphite or artificial graphite; carbon-based materials such as carbon black, acetylene black, ketjen black, channel black, furnace black, lamp black, thermal black, and carbon fiber; metal powder or metal fiber such as copper, nickel, aluminum, and silver; conductive whisker such as zinc oxide and potassium titanate; conductive metal oxides such as titanium oxide; conductive polymers such as a polyphenylene derivative, or the like. The conductive material may be usually included at 1 wt% to 30 wt% based on the total weight of the positive electrode active material layer.

In addition, the binder may serve to improve adhesion between positive electrode active material particles and adhesive strength between the positive electrode active material and the current collector. A non-limiting example of the binder may include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), sulfonated-EPDM, styrene-butadiene rubber (SBR), fluorine rubber, various copolymers thereof, or the like. The binder may be included at 1 wt% to 30 wt%, based on the total weight of the positive electrode active material layer.

The positive electrode according to an exemplary embodiment of the present invention may be produced according to a common method for producing a positive electrode for a sodium secondary battery, except for using the positive electrode active material described above. For example, the positive electrode active material, and selectively, a slurry for forming a positive electrode active material layer including the binder and the conductive material are applied on a positive electrode current collector, and drying and rolling are performed to produce a positive electrode. According to another exemplary embodiment, the slurry for a positive electrode active material layer is cast on a separate support and a positive electrode active material layer is peeled off from the support to obtain a film, which is laminated on the positive electrode current collector, thereby producing the positive electrode.

According to another aspect of the present invention, an electrochemical device including the positive electrode is provided. Herein, the electrochemical device may be, specifically, a battery, a capacitor, and the like, and more specifically, a sodium secondary battery.

The sodium secondary battery includes a positive electrode, a negative electrode placed to face the positive electrode, a separator interposed between the positive electrode and the negative electrode, and an electrolyte (electrolytic solution). In addition, the sodium secondary battery may include a battery container (case) which stores an electrode assembly including the positive electrode, the negative electrode, and the separator, and a sealing member for sealing the battery container.

Herein, the sodium secondary battery may be classified into a can-type sodium secondary battery in which the electrode assembly is built into a metal can and a pouch-type sodium secondary battery in which the electrode assembly is built into a pouch formed of a sheet such as an aluminum laminate, depending on the shape of the battery container (case).

In particular, in the case of the pouch type sodium secondary battery using the positive electrode including the positive electrode active material according to various exemplary embodiments of the present invention, a possibility of causing a side reaction between the positive electrode active material and the electrolytic solution is low, and thus, stability during storage and/or operation is improved and also gassing is reduced.

Hereinafter, the present invention will be described in detail by the examples, however, the examples are for describing the present invention in more detail, and the scope of the present invention is not limited to the following examples.

**Examples**

Production Example 1: Production of positive electrode active material

Example 1

a) Production of sodium nickel manganese-based oxide

A sodium compound $Na_2CO_3$ was added to a $Ni_{0.35}Mn_{0.65}(OH)_2$ precursor at an equivalent of Na/M = 0.67, and a heat treatment was performed at 950°C for 12 hours under an air atmosphere to obtain sodium nickel manganese-based oxide positive electrode ($Na_{0.67}Ni_{0.35}Mn_{0.65}O_2$) powder.

b) Formation of cobalt compound

400 g of DIW was fed to a batch type 5 L reactor, 23.9 g of a 1 M NaOH solution was fed, and then stirring was maintained at a temperature of 25°C for 15 minutes at a stirring speed of 300 rpm so that pH was 12.8. Subsequently, $Na_{0.67}Ni_{0.35}Mn_{0.65}O_2$ was fed and stirring was performed at 300 rpm.

Thereafter, a cobalt sulfate aqueous solution having a concentration of 1.7 M was reacted for 60 minutes while maintaining pH 11.5 to 12 by adjusting the feeding amount at a speed of 51.18 ml/hr, thereby forming a cobalt hydroxide on the surface of the sodium manganese-based oxide particles. The obtained particles were separated and dried in a vacuum oven at 110°C for 24 hours.

c) Cobalt doping

Thereafter, the particle powder was fed to an alumina crucible, and then a heat treatment was performed at 800°C for 12 hours under an air atmosphere, thereby producing a cobalt-doped positive electrode active material.

Comparative Example 1

The sodium nickel manganese-based oxide ($Na_{0.67}Ni_{0.35}Mn_{0.65}O_2$) powder of step a) was used as a positive electrode active material, without performing steps b) and c).

Comparative Examples 2 and 3

Cobalt-doped positive electrode active materials were produced in the same manner as in Example 1, except that the heat treatment of step c) was performed at a temperature of 600°C (Comparative Example 2) and 700°C (Comparative Example 3), respectively.

Comparative Example 4

A sodium nickel manganese-based oxide positive electrode active material ($Na_{0.67}Ni_{0.315}Co_{0.1}Mn_{0.585}O_2$ powder) was obtained by adding Cocacetate and a sodium compound $Na_2CO_3$ to a $Ni_{0.35}Mn_{0.65}(OH)_2$ precursor to equivalents of Co/(Ni+Mn+Co) = 0.1 and Na/(Ni+Mn+Co) = 0.67, and performing a heat treatment at 960°C for 12 hours under an air atmosphere.

Production Example 2: Production of sodium secondary battery

90 wt% of the produced positive electrode active material, 5.5 wt% of carbon black, and 4.5 wt% of a PVdF binder were dispersed in 30 g of N-methyl-2 pyrrolidone (NMP) to produce a positive electrode slurry. The positive electrode slurry was uniformly applied on an aluminum thin film having a thickness of 15 $\mu$m, and dried under vacuum at 135°C to produce a positive electrode for a sodium secondary battery.
For the positive electrode, a sodium metal plate was used as a counter electrode, a porous polyethylene membrane (Celgard 2300, thickness: 25 $\mu$m) was used as a separator, and an electrolytic solution in which $NaPF_6$ was present at a concentration of 1.15 M in a mixed solvent of ethylene carbonate and ethyl methyl carbonate at a volume ratio of 3:7 was used to produce a sodium secondary battery (coin battery).

**Experimental Examples**

Experimental Example 1: Analysis of SEM image of positive electrode active material particle surface

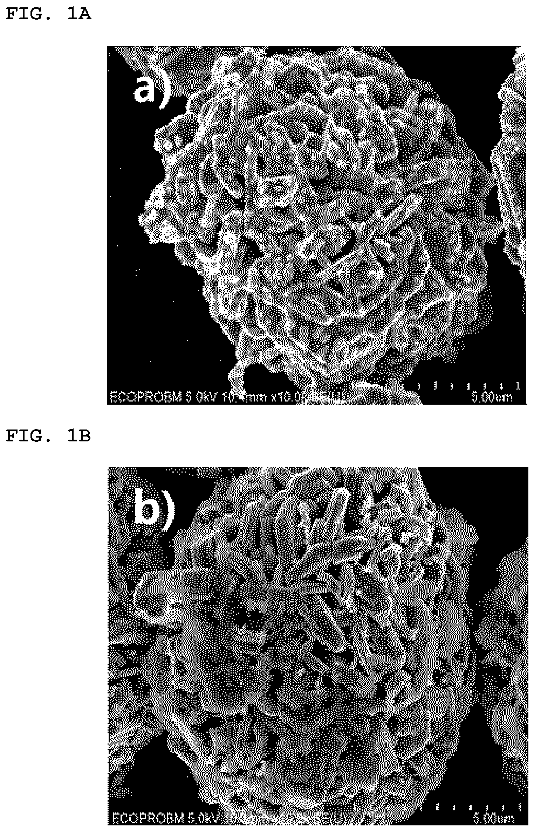

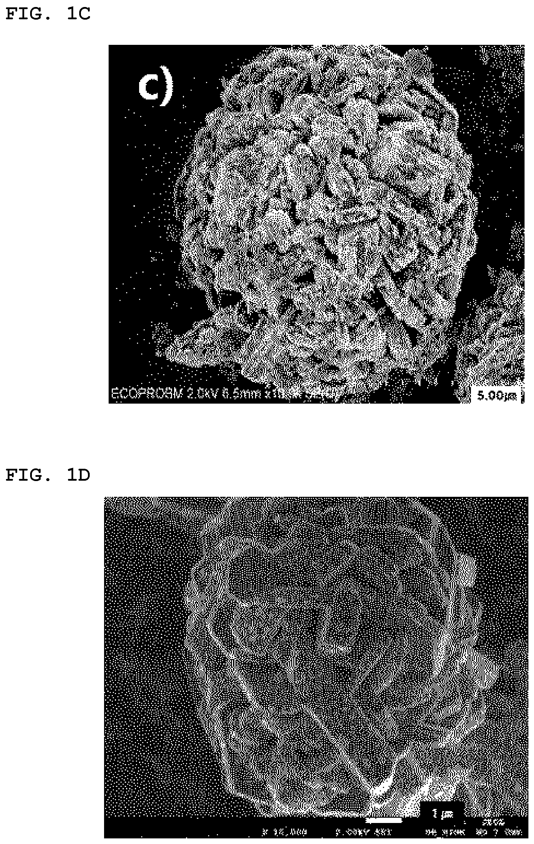

FIGS. 1A to 1C are SEM images of surfaces of positive electrode active material particles produced in step a) (before coating), step b) (after coating), and step c) (after heat treatment) of Example 1, and FIG. 1D is an SEM image of a surface of a positive electrode active material particle produced in Comparative Example 4.
Referring to FIGS. 1A to 1C, it was confirmed that the sodium nickel manganese oxide before coating showed a plate shape in which primary particles had an aspect ratio of 1:2.7 to 1:5, and maintained the primary particle shape even after the coating and the heat treatment.

Experimental Example 2: Confirmation of Co doping uniformity on surface/in inside of manganese-based oxide particles through scanning electron microscope (SEM) and energy-dispersive X-ray spectroscopy (EDS) analyses

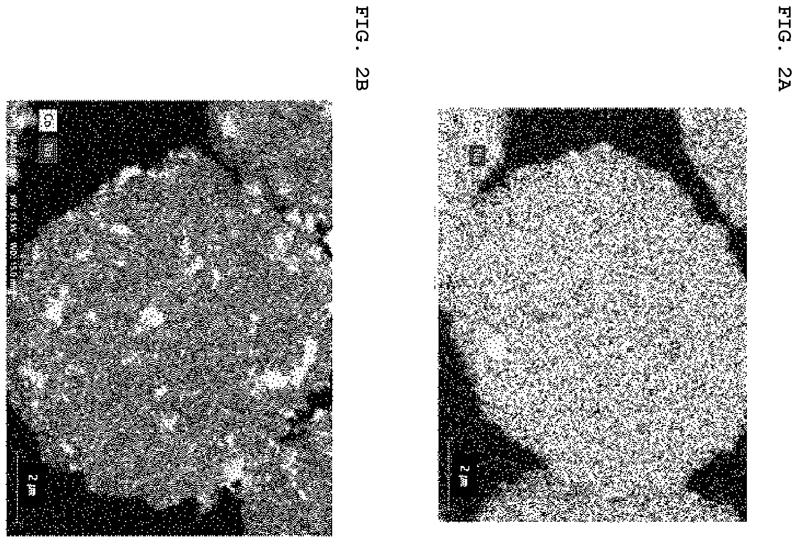

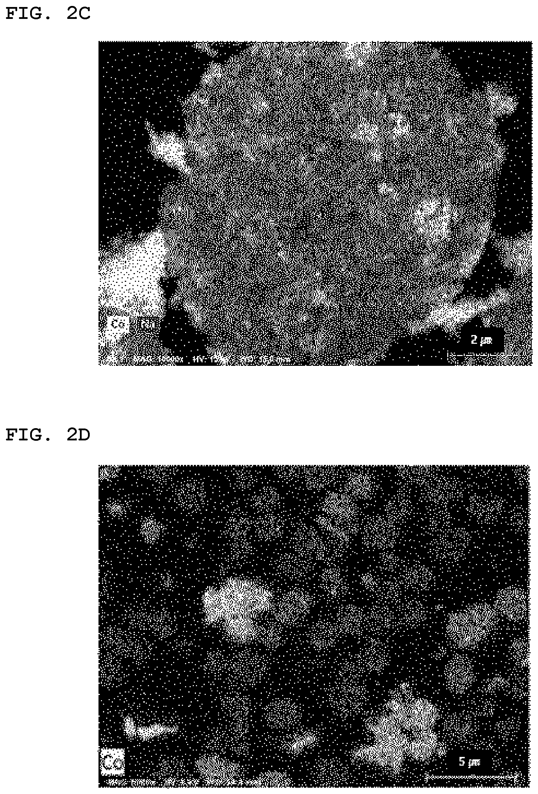

FIGS. 2A to 2D are SEM-EDS images of surfaces of positive electrode active material particles doped with Co which were produced in Example 1 and Comparative Examples 2 to 4.
Referring to FIGS. 2A to 3C, as the temperature increased during the heat treatment after Co coating, it was confirmed that uniform Co doping was performed on the surface of the positive electrode active material secondary particles. In Comparative Examples 2 and 3, since Co coating heat treatment was performed at a relatively low temperature, doped Co was concentrically distributed only on the surface of oxide particles and formed into a coating layer, and the coating layer was formed into a non-uniform island shape. Thus, Comparative Examples 2 and 3 were expected to have a doping Co concentration gradient which was decreased from the surface portion to the center portion of the cross section of the secondary particles. Referring to FIG. 2D, in Comparative Example 4, it was confirmed that a non-uniform coating layer such as Co agglomeration on the surface of the positive electrode active material particles during drying coating with a Co acetate source was formed.

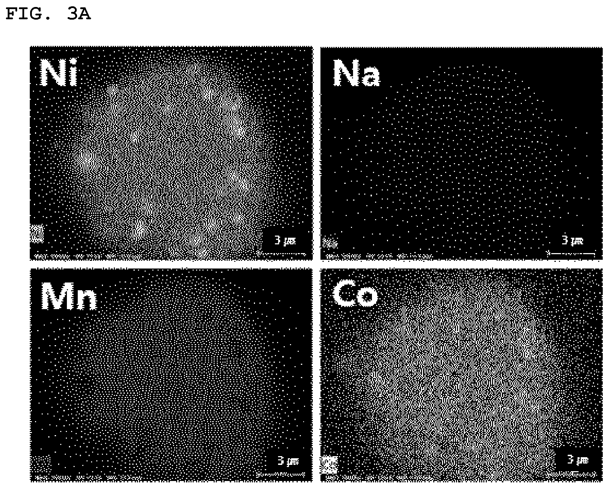

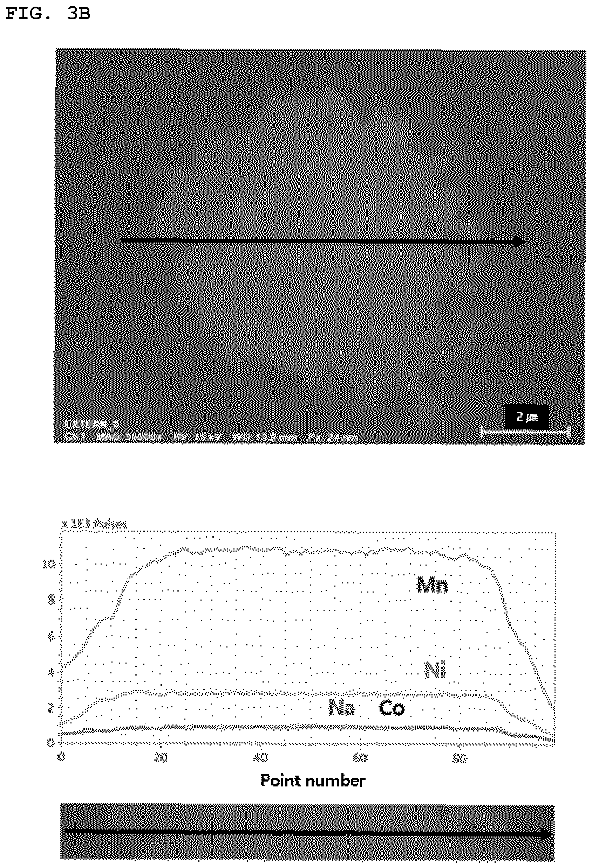

FIGS. 3A and 3B are cross sectional SEM-EDS images of positive electrode active material particles doped with Co which were produced in Example 1 and a graph (EDS line scanning) showing change in contents of metal elements (Ni, Co, and Mn) present in sodium manganese-based oxide secondary particles through EDS analysis to a direction indicated in the cross sectional SEM image. In addition, the following Table 1 shows molar concentrations (%) of Ni, Co, and Mn with respect to 100 mol% of all metals (Ni+Co+Mn) other than sodium in the center portion, the surface portion, and the entire portion (bulk) of the particles. The molar concentrations of Ni, Co, and Mn in the center portion and the surface portion of the secondary particles were calculated from EDS Line scanning, and the molar concentrations of Ni, Co, and Mn in all secondary particles (bulk) were calculated through ICP analysis.

[Table 1]

| M/Mtotal (mol%) | Center portion of secondary particles (0 ~ 1/2R) | Surface portion of secondary particles (1/2R ~ R) | Entire portion of secondary particles (bulk) |
|---|---|---|---|
| Ni/Co/Mn | 64.8/5.2/30 | 63.5/5.1/31.4 | 64.3/5.3/30.4 |

(continued)

| M/Mtotal (mol%) | Center portion of secondary particles (0 ~ 1/2R) | Surface portion of secondary particles (1/2R ~ R) | Entire portion of secondary particles (bulk) |
|---|---|---|---|
| Na/(Ni+Co+Mn) | 0.625 | 0.591 | 0.612 |

The positive electrode active material doped with Co produced in Example 1 was confirmed to have uniform cobalt doping on the surface and into the inside of the secondary particles, and it was confirmed that a transition metal ternary oxide having a uniform composition was able to be produced by the coating/doping technology of the present invention.

Experimental Example 3: Confirmation of P2-type layered structure and heterogeneous phase through XRD analysis

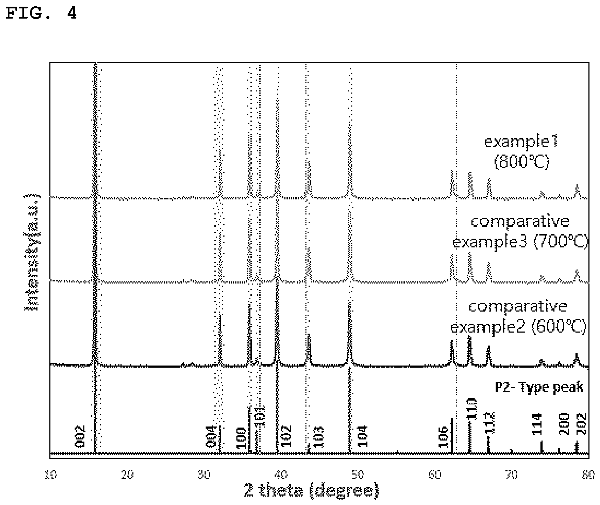

FIG. 4 shows results of XRD analysis of positive electrode active materials (bulk) produced in Example 1 and Comparative Examples 2 and 3. In addition, the following Table 2 shows ratios of NiO (heterogeneous phase) formed in the positive electrode active material depending on a Co doping heat treatment temperature, which was measured using a TOPAS program.

[Table 2]

| | NiO (%) | NiO (%/100°C) |
|---|---|---|
| Reference (no heat treatment) | 0.8 | - |
| Comparative Example 2 (heat treatment at 600°C) | 2.66 | - |
| Comparative Example 3 (heat treatment at 700°C) | 3.09 | 0.43 |
| Example 1 (heat treatment at 800°C) | 3.46 | 0.37 |

(In Table 2, Reference was a positive electrode active material coated with cobalt which was not subjected to a cobalt doping process (heat treatment) of step c) in Example 1.)

Referring to FIG. 4 and Table 2, as a result of XRD analysis of the positive electrode active materials produced in Example 1 and Comparative Examples 2 and 3, (004), (100), (101), (102), (103), (104), and (002) peaks were detected, and thus, the positive electrode active materials were confirmed to have a P2-type layered structure. In addition, as a doping heat treatment temperature increased, it was confirmed that a ratio of a NiO impurity was increased ($2\Theta$ = a NiO peak confirmed near 37°, 43°, and 63°), but the increase width ($\Delta$ NiO) was gradually decreased at a temperature about 800°C. It was found that in Example 1, uniform Co doping was possible and simultaneously a NiO ratio as a heterogeneous phase was adjusted to be 5% or less which was low, as compared with Comparative Examples 2 and 3. In addition, referring to FIG. 3A, in the present invention, it was confirmed that a small amount of NiO was synthesized by doping through Co doping and the heat treatment, but Co and Mn-related heterogeneous phase (such as $CoO_2$ and $MnO_2$) was not produced.

Experimental Example 4: Evaluation of electrochemical performance of sodium secondary battery

The sodium secondary batteries produced in Example 1 and Comparative Examples 1 and 2 were charged/-discharged 50 times under a condition of 1 C/1 C at 25°C in an operation voltage range of 2.0 V to 4.6 V, and then a ratio of discharge capacity at 50th cycle as compared with an initial capacity (cycle capacity retention rate) was measured.

[Table 3]

| | Cycle life (50 cy) (%) |
|---|---|
| Example 1 | 81.3% |
| Comparative Example 1 | 66.1% |

Referring to Table 3, it was confirmed that the cycle life characteristics of the sodium secondary battery using the positive electrode active material according to Example 1 were improved as compared with those of the sodium secondary battery using the positive electrode active material according to Comparative Example 1.

Experimental Example 5: Analysis of unreacted residual sodium

In order to measure residual sodium, 1 g of a coating positive electrode active material was immersed in 5 g of distilled water, stirring was performed for 5 minutes, a filtrate was taken for titration with 0.1 M HCl, and the volume of HCl added until the pH of the filtrate was 5 was measured to analyze the unreacted sodium remaining on the surface of the positive electrode active material.

[Table 4]

| | NaOH (ppm) | $Na_2CO_3$ (ppm) | Total (ppm) |
|---|---|---|---|
| Example 1 | 440 | 4,253 | 4, 693 |
| Comparative Example 4 | 17,774 | 16,344 | 34,118 |
| Comparative Example 1 (ref.) | 17,717 | 10,503 | 28,220 |

Referring to Table 4, it was confirmed that the positive electrode active material according to Example 1 had a greatly reduced residual sodium content by performing the Co coating/doping process. In particular, NaOH in residual sodium was used in the Co coating/doping reaction (coating reaction: $NaOH + CoSO_4 \rightarrow Co(OH)_2 + Na_2SO_4$) produced $Co(OH)_2$ was uniformly coated on the surface of the oxide particles and doped on the surface and into the inside of the particles during the heat treatment, and $Na_2SO_4$ as a by-product was easily removed with water. However, the positive electrode active material according to Comparative Example 4 was dry coated with a Co acetate source, and showed results of a cobalt clumping phenomenon (non-uniform coating) and uncontrolled residual Na.

As described above, although the present invention has been shown and described with respect to specific exemplary embodiments, it will be obvious to those skilled in the art that the present invention may be variously modified and altered without departing from the spirit and scope of the present invention as defined by the following claims.

**Claims**

1. A positive electrode active material for a sodium secondary battery comprising a sodium manganese-based oxide which includes at least sodium (Na), nickel (Ni), and manganese (Mn) and contains 55 mol% or more of manganese in all metals other than sodium,
   wherein the sodium manganese-based oxide is a secondary particle formed by agglomeration of at least one primary particle, and a surface and an inside of the secondary particles are doped with cobalt (Co).

2. The positive electrode active material for a sodium secondary battery of claim 1, wherein the sodium manganese-based oxide satisfies the following Relation 1:

$$[Relation\ 1]$$

$$(Dc-Ds)/Dt \leq \pm 10\%$$

   wherein when an area corresponding to 0 to 50% of a length (R) from a center to a surface based on a cross section of the secondary particle is defined as a first area ($R_1$) and an area corresponding to 50 to 100% of the length is defined as a second area ($R_2$),
   Ds, Dc, and Dt are measured in the first area ($R_1$), the second area ($R_2$), and the entire cross section of the particle ($R_1+R_2$), respectively, and are molar concentrations of cobalt (Co) to all metals other than sodium (M), respectively.

3. The positive electrode active material for a sodium secondary battery of claim 2, wherein the cobalt concentration of the first area ($R_1$) is 50 mol% or more with respect to 100 mol% of the total cobalt concentration based on the cross section of the secondary particle.

4. The positive electrode active material for a sodium secondary battery of claim 1, wherein the sodium manganese-based oxide satisfies the following Relation 2:

[Relation 2]

(Mc-Ms)/Mt≤±10%

wherein when an area corresponding to 0 to 50% of a length (R) from a center to a surface based on a cross section of the secondary particle is defined as a first area ($R_1$) and an area corresponding to 50 to 100% of the length is defined as a second area ($R_2$),
Ms, Mc, and Mt are measured in the first area ($R_1$), the second area ($R_2$), and the entire cross section of the particle ($R_1$+$R_2$), respectively, and are molar concentrations of nickel (Ni) or manganese (Mn) to all metals other than sodium (M), respectively.

5. The positive electrode active material for a sodium secondary battery of claim 1, wherein the primary particles of the sodium manganese-based oxide have an aspect ratio of 1:2.5 to 1:5.5.

6. The positive electrode active material for a sodium secondary battery of claim 1, wherein the sodium manganese-based oxide is represented by the following Chemical Formula 1:

[Chemical Formula 1] $Na_aNi_xCo_yM1_zMn_{1-x-y-z}O_2$

wherein M1 is at least one selected from P, Sr, Ba, Ti, Zr, Mn, Al, W, Ce, Hf, Ta, Cr, F, Mg, Cr, V, Fe, Zn, Si, Y, Ga, Sn, Mo, Ge, Nd, B, Nb, Gd, and Cu and
$0.50 \leq a \leq 0.80$, $0.05 \leq x \leq 0.45$, $0.01 \leq y \leq 0.15$, $0 \leq z \leq 0.1$, and $0.55 \leq 1-x-y-z \leq 0.85$ are satisfied.

7. The positive electrode active material for a sodium secondary battery of claim 1, wherein the sodium manganese-based oxide shows at least one peak selected from the group consisting of (004), (100), (101), (102), (103), (104), and (002) peaks by X-ray diffraction analysis (XRD).

8. The positive electrode active material for a sodium secondary battery of claim 1, wherein the sodium manganese-based oxide has a NiO ratio of 5% or less as measured by a Rietveld refinement method based on X-ray diffraction analysis.

9. The positive electrode active material for a sodium secondary battery of claim 1, wherein the sodium manganese-based oxide includes a P2-type layered structure.

10. The positive electrode active material for a sodium secondary battery of claim 1, wherein the positive electrode active material includes 5,000 ppm or less of residual sodium.

11. A method for producing a positive electrode active material for a sodium secondary battery, the method comprising:

a) preparing a sodium manganese-based oxide which includes at least sodium (Na), nickel (Ni), and manganese (Mn) and contains 55 mol% or more of manganese in all metals other than sodium;
b) feeding the sodium manganese-based oxide, a solvent, and a cobalt precursor to a reactor, and forming a cobalt compound on a surface of particles of the sodium manganese-based oxide; and
c) heat treating a product of b) to dope the surface and the inside of the sodium manganese-based oxide particles with cobalt.

12. The method for producing a positive electrode active material for a sodium secondary battery of claim 11, wherein the sodium manganese-based oxide of a) is a secondary particle formed by agglomeration of at least one primary particle, and the primary particles have an aspect ratio of 1:2.5 to 1:5.5.

13. The method for producing a positive electrode active material for a sodium secondary battery of claim 11, wherein b) includes:
b1) feeding the sodium manganese-based oxide and the solvent to the reactor and performing stirring; and b2) feeding the cobalt precursor to the reactor and performing stirring to form a cobalt hydroxide on the surface of the sodium manganese-based oxide.

14. The method for producing a positive electrode active material for a sodium secondary battery of claim 11, wherein the cobalt precursor of b) is fed to the reactor so that a mole ratio (Co/M) of cobalt (Co) to all metals other than sodium (M) of the sodium manganese-based oxide is 1 to 15.

15. The method for producing a positive electrode active material for a sodium secondary battery of claim 11, wherein the cobalt precursor of b) includes $Co(OH)_2$, $CoOOH$, $Co(OCOCH_3)_2$, $Co(NO_3)_2$, $CoSO_4$, $Co(SO_4)_2$, or a combination thereof.

16. The method for producing a positive electrode active material for a sodium secondary battery of claim 11, wherein the heat treatment of c) is performed at 600 to 900°C for 6 to 18 hours.

17. A positive electrode for a sodium secondary battery comprising the positive electrode active material of claim 1.

18. A sodium secondary battery using the positive electrode of claim 17.

FIG. 1A

FIG. 1B

**FIG. 1C**

**FIG. 1D**

FIG. 2A

FIG. 2B

FIG. 2C

FIG. 2D

FIG. 3A

FIG. 3B

FIG. 4

## INTERNATIONAL SEARCH REPORT

| International application No. |
| --- |
| **PCT/KR2023/007835** |

### A. CLASSIFICATION OF SUBJECT MATTER

**H01M 4/505**(2010.01)i; **H01M 4/36**(2006.01)i; **H01M 4/525**(2010.01)i; **H01M 4/131**(2010.01)i; **H01M 10/054**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/505(2010.01); H01M 10/052(2010.01); H01M 10/054(2010.01); H01M 4/485(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 소듐 이차전지(sodium secondary battery), 양극 활물질(cathode material), 코발트 (cobalt, Co), 도핑(doping), 망간(mangan, Mn)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2021-0092775 A (CONTEMPORARY AMPEREX TECHNOLOGY CO., LIMITED) 26 July 2021 (2021-07-26)<br>See abstract; claims 1 and 9-11; and paragraphs [0020]-[0023], [0032], [0040], [0094] and [0114]. | 11,13-16 |
| Y | | 1-10,12,17,18 |
| Y | KR 10-2019-0010494 A (IUCF-HYU (INDUSTRY-UNIVERSITY COOPERATION FOUNDATION HANYANG UNIVERSITY)) 30 January 2019 (2019-01-30)<br>See claim 7; and paragraphs [0040], [0043] and [0095]. | 1-10,12,17,18 |
| A | KR 10-2018-0089030 A (LG CHEM, LTD.) 08 August 2018 (2018-08-08)<br>See entire document. | 1-18 |
| A | KR 10-2015-0138208 A (UMICORE et al.) 09 December 2015 (2015-12-09)<br>See entire document. | 1-18 |

✓ Further documents are listed in the continuation of Box C.    ✓ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 September 2023** | **05 September 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

<table>
<tr><td colspan="2">International application No.</td></tr>
<tr><td colspan="2">**PCT/KR2023/007835**</td></tr>
</table>

**C.  DOCUMENTS CONSIDERED TO BE RELEVANT**

| Category* | Citation of document, with indication, where appropriate, of the relevant passages | Relevant to claim No. |
|---|---|---|
| A | KR 10-2021-0097057 A (LG CHEM, LTD.) 06 August 2021 (2021-08-06)<br>See entire document. | 1-18 |

**INTERNATIONAL SEARCH REPORT**
Information on patent family members

International application No.

**PCT/KR2023/007835**

| Patent document cited in search report | | | Publication date (day/month/year) | Patent family member(s) | | | Publication date (day/month/year) |
|---|---|---|---|---|---|---|---|
| KR | 10-2021-0092775 | A | 26 July 2021 | CN | 111435740 | A | 21 July 2020 |
| | | | | CN | 111435740 | B | 22 April 2022 |
| | | | | EP | 3800712 | A1 | 07 April 2021 |
| | | | | EP | 3800712 | A4 | 17 November 2021 |
| | | | | EP | 3800712 | B1 | 09 November 2022 |
| | | | | ES | 2932158 | T3 | 13 January 2023 |
| | | | | JP | 2022-513834 | A | 09 February 2022 |
| | | | | JP | 7082716 | B2 | 08 June 2022 |
| | | | | PT | 3800712 | T | 07 December 2022 |
| | | | | US | 11196046 | B2 | 07 December 2021 |
| | | | | US | 2021-0167375 | A1 | 03 June 2021 |
| | | | | WO | 2020-143532 | A1 | 16 July 2020 |
| KR | 10-2019-0010494 | A | 30 January 2019 | KR | 10-2228659 | B1 | 16 March 2021 |
| | | | | US | 11437617 | B2 | 06 September 2022 |
| | | | | US | 2021-0367234 | A1 | 25 November 2021 |
| | | | | WO | 2019-017736 | A2 | 24 January 2019 |
| | | | | WO | 2019-017736 | A3 | 11 April 2019 |
| | | | | WO | 2019-017736 | A9 | 06 June 2019 |
| KR | 10-2018-0089030 | A | 08 August 2018 | None | | | |
| KR | 10-2015-0138208 | A | 09 December 2015 | CN | 105210218 | A | 30 December 2015 |
| | | | | CN | 105210218 | B | 02 January 2018 |
| | | | | EP | 2962346 | A1 | 06 January 2016 |
| | | | | EP | 2962346 | A4 | 09 November 2016 |
| | | | | EP | 2962346 | B1 | 13 June 2018 |
| | | | | JP | 2016-514348 | A | 19 May 2016 |
| | | | | JP | 6433438 | B2 | 05 December 2018 |
| | | | | KR | 10-1765406 | B1 | 07 August 2017 |
| | | | | US | 10193134 | B2 | 29 January 2019 |
| | | | | US | 2016-0013470 | A1 | 14 January 2016 |
| | | | | WO | 2014-132174 | A1 | 04 September 2014 |
| KR | 10-2021-0097057 | A | 06 August 2021 | CN | 115004417 | A | 02 September 2022 |
| | | | | EP | 4080614 | A1 | 26 October 2022 |
| | | | | EP | 4080614 | A4 | 19 July 2023 |
| | | | | JP | 2023-513027 | A | 30 March 2023 |
| | | | | US | 2023-0081939 | A1 | 16 March 2023 |
| | | | | WO | 2021-154021 | A1 | 05 August 2021 |

Form PCT/ISA/210 (patent family annex) (July 2022)

26